# EUROPÄISCHE PATENTSCHRIFT

(11) **EP 1 075 972 B1**
(45) Veröffentlichungstag und Bekanntmachung des Hinweises auf die Patenterteilung: **08.10.2003**
(21) Anmeldenummer: 00114382.5
(22) Anmeldetag: 05.07.2000
(51) Int. Cl.: B60H 1/00

(54) **Luftleitsystem für ein Kraftfahrzeug**
Air conduit system for motor vehicle
Système de conduit d'air pour véhicule automobile

(30) Priorität: 13.08.1999 DE 19938453
(43) Veröffentlichungstag der Anmeldung: 14.02.2001
(73) Patentinhaber: Bayerische Motoren Werke Aktiengesellschaft, 80809 München (DE)
(72) Erfinder: Müller, Siegfried, 85305 Jetzendorf (DE); Karl, Rüdiger, 82319 Starnberg (DE)

(56) Entgegenhaltungen:
- EP-A- 0 607 585
- DE-A- 4 204 189
- DE-A- 4 232 847

## Beschreibung

Die Erfindung bezieht sich auf ein Luftleitsystem für ein Kraftfahrzeug, und insbesondere für eine Kraftfahrzeug-Klimaanlage, nach dem Oberbegriff des Patentanspruchs 1.

Bei Luftleitsystemen von Personenkraftwagen werden die Luftzufuhrrohre für die vordere Seitenscheibenbelüftung üblicherweise hinter der Instrumententafel montiert oder in diese integriert, wie beispielsweise die EP 0 141 959 B1 zeigt. Da derartige Luftzufuhrrohre einen relativ großen Strömungsquerschnitt benötigen, ist deren Anordnung an oder in der Instrumententafel wegen der dort ohnehin beengten Platzverhältnisse jedoch mit erheblichen Einbauschwierigkeiten verbunden.

Zur Erhöhung der Packungsdichte im Bereich des Armaturenbretts wird daher bei dem aus der DE 42 32 847 A1 bekannten Luftleitsystem der eingangs genannten Art der Innenraum des die A-Säulen des Kraftfahrzeugs miteinander verbindenden, im Querschnitt geschlossenen Querträgers zur Luftzufuhr zu den vorderen, seitlichen Luftaustrittsdüsen ausgenutzt, derart, daß in den Querträger als Korrosionsschutz, und um störende Wärmespeichereffekte des Querträgers zu vermeiden, ein über Abstandhalter wärmeisoliertes Kunststoffrohr eingezogen wird. Zu diesem Zweck ist der Querträger als geradliniges Strangpreßprofil ausgebildet und im mittleren Abschnitt großflächig durchbrochen, und an das Kunststoffrohr sind nachträglich gesonderte Endstücke zur Luftumlenkung im Auslaßbereich angefügt. Aus Konstruktions- und Festigkeitsgründen werden für Fahrzeugstrukturen jedoch häufig abgewinkelte oder gekrümmte, über längere Abschnitte im Querschnitt geschlossene Quer- oder Hohlträger benötigt, für die eine derartige Luftführung mit nachträglich eingezogenem Innenrohr nicht oder nur mit unverhältnismäßig großem Bauaufwand anwendbar ist.

Aufgabe der Erfindung ist es, das Luftleitsystem der eingangs genannten Art so auszubilden, daß selbst stärker gekrümmte oder abgewinkelte, über größere Längen im Querschnitt geschlossene Hohlträger der Fahrzeugstruktur auf einfache Weise und ohne störende Nebeneffekte als Luftführungsrohre nutzbar gemacht werden.

Diese Aufgabe wird erfindungsgemäß durch das im Patentanspruch 1 gekennzeichnete Luftleitsystem gelöst.

Erfindungsgemäß wird auf ein gesondertes Innenrohr im Hohlträger verzichtet und dieser stattdessen mit einer sich durchgehend über die Hohlträger-Innenfläche einschließlich der Luftein- und -auslaßbereiche erstreckenden, den Korrosionsschutz und die Wärmedämmung übernehmenden Isolationsschicht belegt, so daß sich Hohlträger praktisch beliebiger Form und Länge als Luftführungskanäle unmittelbar in das Luftleitsystem einbeziehen lassen. Zugleich entfällt eine umständliche Montage eines separaten Innenrohrs und der nachträgliche Anbau zusätzlicher, endseitiger Rohrstücke, so daß auch der Herstellungsaufwand deutlich verringert wird.

Wegen der günstigen Wärme- und Korrosionsschutzeigenschaften und nicht zuletzt aus Kostengründen besteht die Wärmeisolationsschicht gemäß Anspruch 2 vorzugsweise aus einem geschlossenporigen Schaumstoffmaterial.

Weil die Formgebung des Hohlträgers nicht dadurch eingegrenzt wird, daß nachträglich ein separates Innenrohr eingezogen werden muß, sind, wie nach Anspruch 3 bevorzugt, am Hohlträger vor dem Aufbringen der Isolationsschicht Luftaus- und -einlaßflansche angeformt, die einen unmittelbaren Anschluß der Austrittsdüsen bzw. des Heiz- oder Klimageräts ermöglichen, wobei sich die Wärmeisolationsschicht unter Einbeziehung der Anschlußflansche durchgängig über die Träger-Innenfläche erstreckt.

In weiterer, herstellungsmäßig besonders bevorzugter Ausgestaltung der Erfindung ist der Hohlträger nach Anspruch 4 einschließlich der Anschlußstellen für oder an weitere Fahrzeugkomponenten, etwa der Instrumententafel, der Lenksäulenabstützung, der Knieschutzhalter und/oder der Stützrohre, als einstückiges Druckformteil ausgebildet.

Nach Anspruch 5 ist als Hohlträger vorzugsweise der oberhalb des Heiz- oder Klimageräts angeordnete, die A-Säulen verbindende Querträger für die Instrumententafel vorgesehen, der dann in zwei getrennte, zur Trägermitte spiegelsymmetrische und auf der Innenfläche jeweils mit einer Wärmeisolationsschicht belegte Luftzufuhrkanäle für die linke bzw. rechte Fahrzeughälfte unterteilt ist.

Die Erfindung wird nunmehr anhand eines Ausführungsbeispiels in Verbindung mit den Zeichnungen näher erläutert. Es zeigen in stark schematisierter Darstellung:
- **Fig. 1**: eine perspektivische Ansicht eines Hohlträgers in Form eines Querträgers für die Instrumententafel; und
- **Fig. 2**: einen Schnitt längs der Linie II-II der Fig. 1 im Bereich der linken Querträgerhälfte.

Der in den Fig. dargestellte Hohlträger 2 der Fahrzeugstruktur erstreckt sich als Querträger für die Instrumententafel über die Breite des Fahrzeuginnenraums und ist mit den (nicht gezeigten) A-Säulen des Fahrzeugs über Endstücke 4 verschraubt. Der Querträger 2 besitzt aus Einbaugründen eine mehrfach abknickende Form und ist im Hinblick auf eine hohe konstruktive Festigkeit als im Querschnitt geschlossener Kastenträger mit einem relativ großflächigen Innenquerschnitt ausgebildet und endseitig mit sich im Querschnitt verjüngenden, zum Fahrzeuginnenraum hin abgebogenen Übergangsabschnitten 6 versehen, die in seitlichen Anschlußflanschen 8 enden.

Integral mit dem Querträger 2 verbunden sind ferner die Befestigungsstellen 10 für die Instrumententafel, die Knieschutzhalter 12, eine zwischen diesen liegende Lenksäulenstütze 14, eine Befestigungslasche 16 für den Beifahrer-Airbag sowie zwei den Querträger 2 im Mittelabschnitt 18 am Fahrzeugtunnel abstützende Rechteckstreben 20, zwischen denen das Heiz- oder Klimagerät angeordnet wird.

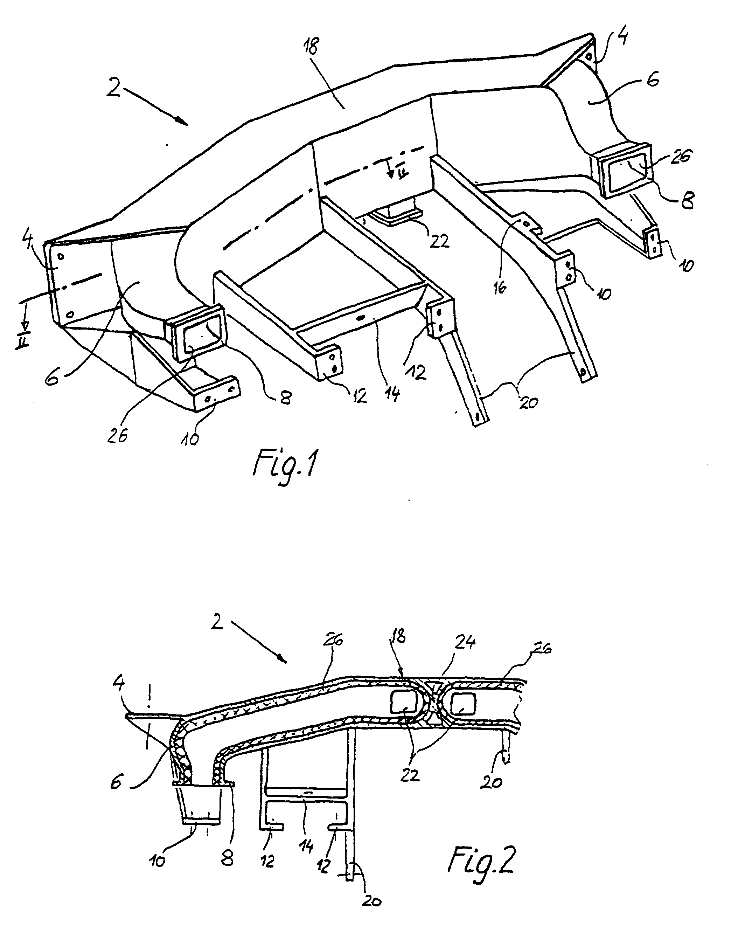

Der Querträger 2 dient ferner zur Luftführung vom Heiz-/Klimagerät zu den vorderen Seitenfenster-Belüftungsdüsen und enthält zu diesem Zweck zwei an das Heiz-/Klimagerät anschließbare, symmetrisch zur Trägermitte angeordnete Verbindungsflansche 22, die durch eine Zwischenwand 24 (Fig. 2) im Trägerinneren voneinander getrennt sind. Aus Korrosionsschutzgründen und um störende Wärmespeichereffekte des Querträgermaterials zu unterbinden, ist das Trägerinnere mit einer feuchtigkeitssperrenden und wärmedämmenden Isolationsschicht 26, z.B. aus geschlossenporigem Schaumstoff, belegt, die sich auf jeder Halbseite des Querträgers 2 unter Einbeziehung der Flanschabschnitte 8, 22 durchgehend über die Träger-Innenfläche erstreckt. Auf diese Weise wird der Querträger 2 als Luftführungsrohr unmittelbar in das Luftleitsystem des Kraftfahrzeugs einbezogen, ohne daß zum Anschluß der seitlichen Belüftungsdüsen an die Anschlußflansche 8 und/oder des Heiz-/Klimageräts an die Verbindungsflansche 22 gesonderte Luftleit- oder -umlenkstücke angefügt werden müssen.

Hergestellt wird der Querträger 2 einschließlich sämtlicher Anschlußstellen 4 bis 22 als einstückiges Bauteil, etwa aus Aluminium im Druckguß- oder Innenhochdruckverfahren. Dabei werden die luftein- und -auslaßseitigen Querträgeröffnungen entsprechend dem benötigten Strömungsquerschnitt zuzüglich der Wandstärke der Isolationsschicht 26 so klein wie möglich gehalten und im Randbereich noch zusätzlich durch die Flanschabschnitte 8 bzw. 22 versteift. Nach dem Aufbringen des Schaumstoffmaterials auf die Träger-Innenflächen - gegebenenfalls unter Zwischenlage einer Klebstoffschicht - ist der Querträger 2 einbaufertig.

## Patentansprüche

1. Luftleitsystem für ein Kraftfahrzeug, insbesondere für eine Kraftfahrzeug-Klimaanlage, mit mindestens einem im Querschnitt geschlossenen Hohlträger (2) der Fahrzeugstruktur, **dadurch gekennzeichnet, daß**
der Hohlträger (2) mit einer auf die Träger-Innenseite aufgebrachten Wärmeisolationsschicht (26) versehen und als Luftführungsrohr in das Luftleitsystem einbezogen ist.

2. Luftleitsystem nach Anspruch 1, **dadurch gekennzeichnet, daß**
die Wärmeisolationsschicht (26) aus einem geschlossenporigen Schaumstoffmaterial besteht.

3. Luftleitsystem nach Anspruch 1 oder 2, **dadurch gekennzeichnet, daß**
der Hohlträger (2) im Luftein- und -auslaßbereich geflanscht ist und sich die Wärmeisolationsschicht (26) unter Einbeziehung der Flanschabschnitte (8, 22) durchgehend über die Träger-Innenfläche erstreckt.

4. Luftleitsystem nach einem der vorhergehenden Ansprüche, **dadurch gekennzeichnet, daß**
der Hohlträger (2) einschließlich der Anschlußstellen (4 bis 22) für oder an weitere Fahrzeugkomponenten als einstückiges Druckformteil ausgebildet ist.

5. Luftleitsystem nach einem der vorhergehenden Ansprüche, mit einem den Hohlträger bildenden, die A-Säulen des Kraftfahrzeugs miteinander verbindenden Querträger für die Instrumententafel, **dadurch gekennzeichnet, daß**
der Querträger in zwei getrennte, zur Trägermitte spiegelsymmetrische und auf der Innenfläche jeweils mit einer Wärmeisolationsschicht (26) belegte Luftzufuhrkanäle für die linke bzw. rechte Fahrzeughälfte unterteilt ist.

## Claims

1. An air piping system for a motor vehicle, especially for an air conditioning system therein, comprising at least one closed-section hollow bearer (2) of the vehicle structure,
**characterised in that** the hollow bearer (2) is coated on the inside with a heat-insulating layer (26) and circulates air in the air piping system.

2. An air piping system according to claim 1,
**characterised in that** the heat insulating layer (26) is made of a closed-pore foam material.

3. An air piping system according to claim 1 or claim 2,
**characterised in that** the hollow bearer (2) is flanged in the air inlet and air outlet region and the heat insulating layer (26) extends continuously over the inner surface of the bearer, including the flange portions (8, 22).

4. An air piping system according to any of the preceding claims, **characterised in that** the hollow bearer (2), including the connecting places (4 to 22) is constructed as a one-piece die casting for or to other components of the vehicle.

5. An air piping system according to any of the preceding claims, comprising a transverse bearer for the instrument board and constituting the hollow bearer and connecting the A-columns of the vehicle to one another, **characterised in that**
the transverse bearer is divided into two separate air supply ducts for the left and right half of the vehicle, with mirror symmetry towards the middle of the bearer and each coated on the inner surface with a heat insulating layer (26).

## Revendications

1. Système de conduit d'air pour véhicule automobile, en particulier pour l'installation de climatisation d'un véhicule automobile, comportant au moins une entretoise creuse (2), fermée en section transversale, de la structure du véhicule automobile,
**caractérisé en ce que**
l'entretoise creuse (2) est pourvue d'une couche d'isolation thermique (26) appliquée à la face intérieure de l'entretoise et est intégrée en tant que tuyau de conduit d'air dans le système de conduit d'air.

2. Système de conduit d'air selon la revendication 1,
**caractérisé en ce que**
la couche d'isolation thermique (26) est constituée d'un matériau en mousse aux pores fermés.

3. Système de conduit d'air selon la revendication 1 ou 2,
**caractérisé en ce que**
l'entretoise creuse (2) est équipée de flasques dans la zone de l'admission et de l'évacuation de l'air et la couche d'isolation thermique (26) s'étend de manière continue sur la surface intérieure de l'entretoise, en incluant les sections de flasque (8, 22).

4. Système de conduit d'air selon l'une quelconque des revendications précédentes,
**caractérisé en ce que**
l'entretoise (2) creuse, y compris les emplacements (4 à 22) de raccordement pour ou à d'autres composants du véhicule automobile, est constituée en tant que pièce emboutie monobloc.

5. Système de conduit d'air selon l'une quelconque des revendications précédentes, comportant une entretoise transversale pour le tableau de bord, reliant ensemble les colonnes A du véhicule automobile, formant l'entretoise creuse,
**caractérisé en ce que**
l'entretoise transversale est subdivisée en deux canalisations d'amenée d'air, séparées, symétriques en miroir par rapport au centre de l'entretoise et dont la surface intérieure est chaque fois recouverte d'une couche d'isolation thermique (26), pour la moitié gauche ou droite du véhicule automobile.
